(19) Europäisches Patentamt
European Patent Office
Office européen des brevets

(11) **EP 3 588 719 B1**

(12) **FASCICULE DE BREVET EUROPEEN**

(45) Date de publication et mention
de la délivrance du brevet:
**17.03.2021 Bulletin 2021/11**

(51) Int Cl.:
***H02H 7/12*** *(2006.01)*  ***H02M 3/337*** *(2006.01)*

(21) Numéro de dépôt: **19178914.8**

(22) Date de dépôt: **07.06.2019**

(54) **METHODE DE PROTECTION D'UN CONVERTISSEUR DC/DC**

METHODE ZUM SCHUTZ EINES GLEICHSTROM-GLEICHSTROM-WANDLERS

METHOD FOR PROTECTING A DC/DC CONVERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.06.2018 FR 1855958**

(43) Date de publication de la demande:
**01.01.2020 Bulletin 2020/01**

(73) Titulaire: **Valeo Siemens eAutomotive France SAS
95800 Cergy (FR)**

(72) Inventeurs:
• **ZHOU, Huan
78800 HOUILLES (FR)**
• **YANG, Gang
92400 COURBEVOIE (FR)**

(74) Mandataire: **Argyma
14 Boulevard de Strasbourg
31000 Toulouse (FR)**

(56) Documents cités:
**EP-A1- 2 709 228    EP-A1- 3 386 053
US-A1- 2015 049 520**

• **FIGGE H ET AL: "Overcurrent protection for the
LLC resonant converter with improved hold-up
time", APPLIED POWER ELECTRONICS
CONFERENCE AND EXPOSITION (APEC), 2011
TWENTY-SIXTH ANNUAL IEEE, IEEE, 6 mars 2011
(2011-03-06), pages 13-20, XP032013855, DOI:
10.1109/APEC.2011.5744569 ISBN:
978-1-4244-8084-5**

**Description**

**DOMAINE TECHNIQUE ET OBJET DE L'INVENTION**

La présente invention concerne le domaine des systèmes d'alimentation d'équipements électriques et/ou électroniques notamment destinés à être embarqués dans un véhicule automobile, en particulier un véhicule automobile électrique ou hybride. La présente invention concerne plus particulièrement le domaine des convertisseurs continu-continu, c'est-à-dire des systèmes électriques permettant de convertir une tension d'entrée continue en une tension de sortie continue, inférieure ou supérieure à la tension d'entrée.

De manière connue, un véhicule automobile électrique ou hybride comprend un système de motorisation électrique, alimenté par une batterie d'alimentation haute tension via un réseau électrique embarqué haute tension et divers équipements électriques auxiliaires, alimentés par une batterie d'alimentation basse tension via un réseau électrique embarqué basse tension.

**ETAT DE LA TECHNIQUE**

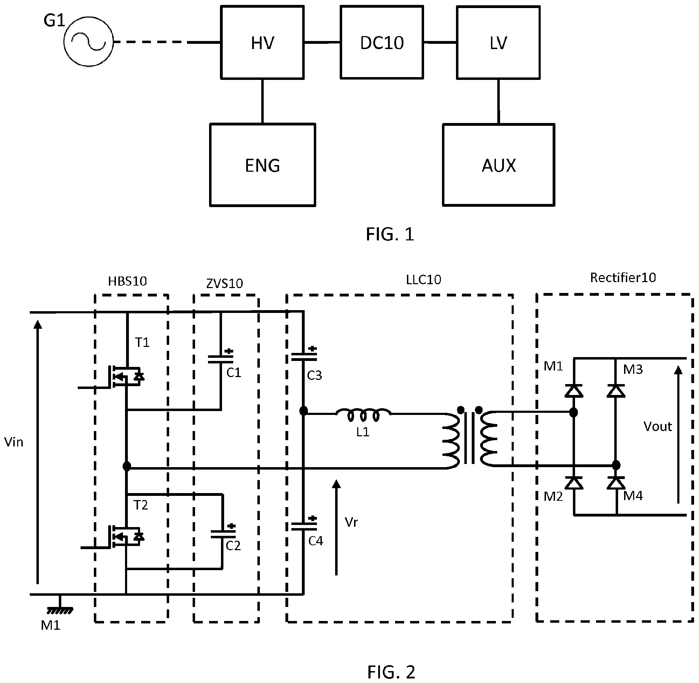

La figure 1 représente un schéma bloc fonctionnel d'un système électrique embarqué de l'état de l'art. Ainsi, la batterie d'alimentation haute tension HV assure une fonction d'alimentation en énergie du système de motorisation électrique ENG permettant la propulsion du véhicule. La batterie d'alimentation basse tension LV alimente des équipements électriques auxiliaires AUX, tels que des calculateurs embarqués, des moteurs de lève-vitres, un système multimédia, etc. La batterie d'alimentation haute tension HV délivre typiquement une tension comprise entre 100 V et 900 V, de préférence entre 100 V et 500 V, tandis que la batterie d'alimentation basse tension LV délivre typiquement une tension de l'ordre de 12 V, 24 V ou 48 V. Ces deux batteries d'alimentation haute et basse tension, HV et LV, doivent pouvoir être chargées.

La recharge en énergie électrique de la batterie d'alimentation haute tension HV est réalisée de manière connue en la connectant, via un réseau électrique haute tension du véhicule, à un réseau d'alimentation électrique externe, par exemple le réseau électrique alternatif domestique G1. Enfin, toujours en référence à la figure 1, la charge de la batterie d'alimentation basse tension LV est réalisée de manière connue par la batterie d'alimentation haute tension HV. Le système comprend à cette fin un convertisseur continu-continu DC10, utilisé dans deux cas, soit entre la batterie d'alimentation haute tension HV et la batterie d'alimentation basse tension LV ou entre deux batteries d'alimentation haute tension HV.

On connait un convertisseur LLC résonant illustré en figure 2, comprenant deux capacités de résonance C3, C4, une bobine de résonance L1 et un transformateur. Dans le cas où la tension de sortie du circuit Vout augmente, le courant de résonance du transformateur augmente aussi et enfin, l'amplitude de la tension Vr aux bornes de chaque capacité de résonance C3, C4 augmente. Lorsque les variations d'amplitude de tension Vr sont trop importantes, elles peuvent provoquer des surcharges dans les capacités de résonance C3 et C4 et à la sortie du circuit.

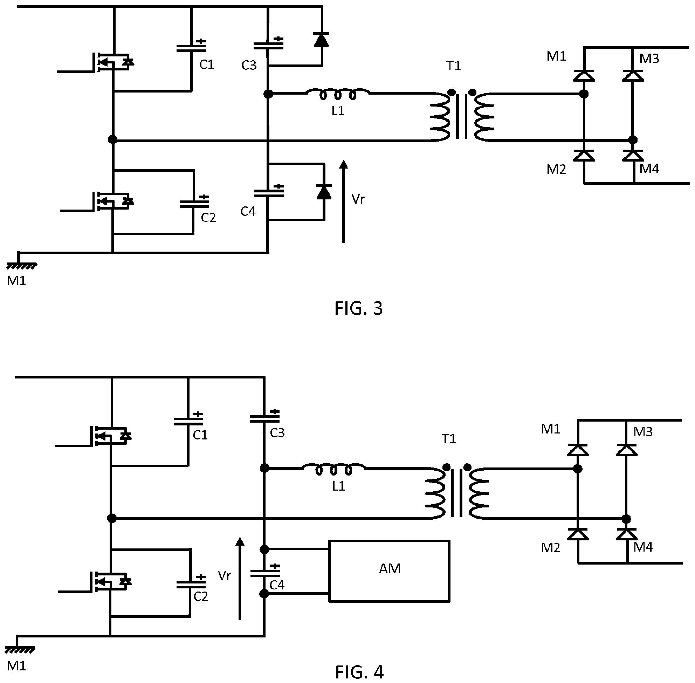

De manière connue, en référence à la figure 3, pour éviter une potentielle détérioration du circuit suite à une surcharge, il faut protéger les capacités de résonance C3 et C4 en limitant la tension à leurs bornes respectives. Pour cela, une première solution consiste à placer des diodes « ultra rapides », désignant des diodes qui commutent à très haute fréquence comme dans le cas présent, à plus de 275 kHz, en parallèle des capacités de résonance C3 et C4. Ainsi, lorsque la tension Vr est strictement positive, la diode est bloquante, mais quand la tension Vr est strictement négative, la diode est passante et court-circuite la capacité. Ceci modifie la structure du circuit, qui n'est donc plus un circuit LLC et ne fonctionne plus comme tel, empêchant ainsi la surcharge des capacités de résonance C3 et C4.

Cette solution présente des inconvénients, notamment le coût élevé de ces diodes « ultra rapides, sachant qu'il en faut deux par circuit. Par ailleurs, les deux diodes « ultra rapides » ne peuvent pas court-circuiter en même temps. Enfin, la tension de seuil de court-circuitage par la diode n'est pas réglable puisqu'elle est intrinsèque à la diode.

En référence à la figure 4, il est représenté une deuxième solution possible pour contrer l'effet de surcharge des capacités de résonance C3 et C4 en utilisant un appareil de mesure de tension. En effet, un appareil de mesure est relié aux bornes de la capacité de résonance C4 et mesure la valeur de la tension Vr aux bornes de cette capacité de résonance C4 en temps réel. Ensuite un DSP, de l'anglais « Digital signal Processor » et désignant un processeur de signal numérique, récupère les valeurs de tension Vr mesurées et détecte lui-même s'il y a une surcharge ou non. Dans le cas d'une surcharge détectée, le DSP arrête le fonctionnement du convertisseur continu-continu DC10.

Cependant, l'appareil de mesure doit pouvoir mesurer très précisément la tension pour détecter une surcharge de la capacité de résonance. Ce type d'appareil de mesure est donc couteux.

Pour pallier ces inconvénients, la présente invention propose un système électrique configuré pour utiliser une méthode de détection de surcharge de la capacité de résonance, basée sur une mesure de courant

De l'art antérieur pertinent pour l'invention sont les documents suivants:

US 2015/049520 A1,
EP 2 709 228 A1,
FIGGE H ET AL: "Overcurrent protection for the LLC resonant converter with improved hold-up time", APPLIED POWER ELECTRONICS CONFERENCE AND EXPOSITION (APEC), 2011 TWENTY-SIXTH ANNUAL IEEE, IEEE, 6 mars 2011 (2011-03-06), pages 13-20
et EP 3 386 053 A1.

## PRESENTATION GENERALE DE L'INVENTION

Plus précisément, l'invention vise un système électrique permettant la conversion d'une tension continue en une autre tension continue, comprenant :

- un convertisseur continu-continu résonant comprenant un circuit convertisseur LLC résonant comprenant une inductance de résonance, deux capacités de résonance et un transformateur, notamment le primaire du transformateur,
- une unité de commande comprenant :

  ◦ un premier module de détermination de la valeur moyenne d'un courant, dit « courant de résonance », circulant dans une branche du circuit convertisseur LLC résonant qui comprend le transformateur, sur une durée dite « durée d'évaluation »,
  ◦ un deuxième module de détermination d'une valeur maximale de la tension aux bornes de chaque capacité de résonance et d'une valeur minimale de la tension aux bornes de chaque capacité de résonance sur la durée dévaluation, à partir de la valeur moyenne du courant de résonance

  de la tension d'entrée (Vin) du convertisseur continu-continu résonant, de la fréquence de commutation (Fs) du convertisseur continu-continu résonant, et de la valeur de la capacité de résonance (Cr),

  ◦ un module de comparaison entre un seuil maximal de tension et la valeur maximale de la tension aux bornes de chaque capacité de résonance et entre un seuil minimal de tension et la valeur minimale de la tension aux bornes de chaque capacité de résonance,
  ◦ un élément de coupure configuré pour arrêter le fonctionnement du convertisseur continu-continu résonant si :

    ▪ ladite valeur maximale de tension est supérieure ou égale au seuil maximal de tension,
    ▪ ladite valeur minimale de tension est inférieure ou égale au seuil minimal de tension.

Notamment, le convertisseur continu-continu résonnant comprend des interrupteurs, par exemple des transistors, qui assurent une fonction d'alimentation à découpage du circuit convertisseur LLC. Notamment, un premier interrupteur est connecté avec une borne d'entrée haute du convertisseur continu-continu résonant et un deuxième interrupteur est connecté à une borne d'entrée basse du convertisseur continu-continu résonant, les deux interrupteurs étant connectés à leur autre borne au niveau d'un point milieu. Une branche du circuit convertisseur LLC comprenant l'inductance de résonance et le transformateur est notamment connectée au point milieu des interrupteurs. En particulier, les interrupteurs sont commutés périodiquement. Les interrupteurs sont notamment commutés de manière complémentaire sur une période de fonctionnement, dite « période de commutation », avec un rapport cyclique de 50%. La fréquence de commutation correspondante est adaptée en fonction des conditions en entrée et/ou en sortie du circuit convertisseur continu-continu.

Notamment, une première capacité de résonance est connectée avec une borne d'entrée haute du convertisseur continu-continu résonant et une deuxième capacité de résonance est connectée à une borne d'entrée basse du convertisseur continu-continu résonant, les deux capacités étant connectées à leur autre borne au niveau d'un point milieu. En particulier, une branche du circuit convertisseur LLC comprenant l'inductance de résonance et le transformateur est connectée au point milieu des capacités de résonance. En particulier, les deux capacités de résonance sont identiques.

La durée d'évaluation correspond notamment à une plusieurs périodes de commutation. La durée d'évaluation peut comprendre, ou être égale à, une portion d'une période de commutation.

Notamment, le circuit convertisseur LLC résonant comprend une deuxième inductance de résonance, formée en particulier par une inductance magnétisante du transformateur.

Selon un mode de réalisation, le premier module de détermination est configuré pour déterminer le courant de résonance à partir d'une mesure de courant en un point de mesure parmi un premier point de mesure situé à l'entrée du convertisseur continu-continu résonant, un deuxième point de mesure situé dans une branche comprenant une capacité de résonance et un troisième point de mesure situé dans une branche comprenant le transformateur.

Selon un mode de réalisation, le convertisseur continu-continu résonant comprend un redresseur, connecté en sortie du transformateur, notamment au niveau du secondaire du transformateur.

Selon un mode de réalisation, le système électrique comprend un filtre, connecté en sortie du convertisseur continu-continu résonant.

Selon un mode de réalisation, le module de comparaison est configuré de sorte que

ledit seuil maximal de tension, définit une valeur maximale de tension autorisée aux bornes de la capacité de résonance, notamment au-dessus de laquelle ladite capacité est en surcharge, et

ledit seuil minimal de tension, définit une valeur minimale de tension autorisée aux bornes de la capacité de résonance, notamment en dessous de laquelle ladite capacité de résonance est en surcharge.

La présente invention vise aussi un procédé de détection d'une surcharge d'un convertisseur continu-continu résonant mis en œuvre dans un système électrique comportant un convertisseur continu-continu résonant comprenant un circuit convertisseur LLC résonant qui comprend une inductance de résonance, deux capacités de résonance et un transformateur, ledit procédé étant remarquable en ce qu'il comprend des étapes de :

- détermination de la valeur moyenne d'un courant, dit « courant de résonance », circulant dans une branche du circuit convertisseur LLC résonant qui comprend le transformateur, sur une durée dite « durée d'évaluation »,
- détermination d'une valeur maximale de la tension aux bornes de chaque capacité de résonance et d'une valeur minimale de la tension aux bornes de chaque capacité de résonance, sur la durée dévaluation « T », à partir de la valeur moyenne déterminée à l'étape précédente

de la tension d'entrée (Vin) du convertisseur continu-continu résonant, de la fréquence de commutation (Fs) du convertisseur continu-continu résonant, et de la valeur de la capacité de résonance (Cr),

- comparaison entre un seuil maximal de tension et la valeur maximale de la tension aux bornes de chaque capacité de résonance et entre un seuil minimal de tension et la valeur minimale de la tension aux bornes de chaque capacité de résonance,
- détection d'une surcharge d'une capacité de résonance si ladite valeur maximale de tension est supérieure ou égale au seuil maximal de tension, et/ou si ladite valeur minimale de tension est inférieure ou égale au seuil minimal de tension.

Selon un mode de réalisation, le procédé comprend, après l'étape de détection d'une surcharge, une étape de coupure du convertisseur continu-continu résonant (1), dans laquelle le fonctionnement du convertisseur continu-continu résonant (1) est arrêté.

Selon un mode de réalisation, la valeur maximale de la tension aux bornes de chaque capacité de résonance est déterminée suivant la formule

$$V_{r\_max} = \frac{1}{2}V_{in} + \frac{I_{r\_avrg}}{C_r 2 F_s}$$

et

la valeur minimale de la tension aux bornes de chaque capacité de résonance est déterminée suivant la formule

$$V_{r\_min} = \frac{1}{2}V_{in} - \frac{I_{r\_avrg}}{C_r 2 F_s},$$

où $V_{in}$ est la tension d'entrée du convertisseur continu-continu résonant et $F_s$ est la fréquence de commutation du continu-continu résonant.

Notamment la tension d'entrée et la fréquence de commutation sont constantes sur la durée d'évaluation.

## DESCRIPTION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

- la figure 1 (déjà commentée), le schéma bloc fonctionnel d'un système électrique selon l'état de l'art ;
- la figure 2 (déjà commentée), un schéma électronique d'un système électrique selon l'état de l'art ;
- la figure 3 (déjà commentée), un schéma électronique d'un système électrique selon l'état de l'art ;
- la figure 4 (déjà commentée), un schéma électronique d'un système électrique selon l'état de l'art ;
- la figure 5, le schéma bloc fonctionnel d'un système électrique selon l'invention,
- la figure 6, le schéma électronique du système électrique de la figure 5,
- la figure 7, un schéma bloc représentant le procédé de détection de surcharge selon l'invention.

Il faut noter que les figures exposent l'invention de manière détaillée pour mettre en œuvre l'invention, lesdites figures pouvant bien entendu servir à mieux définir l'invention le cas échéant.

## DESCRIPTION DETAILLEE DE L'INVENTION

Il est rappelé que la présente invention est décrite ci-après à l'aide de différents modes de réalisation non limitatifs et est susceptible d'être mise en œuvre dans des variantes à la portée de l'homme du métier, également visées par la présente invention.

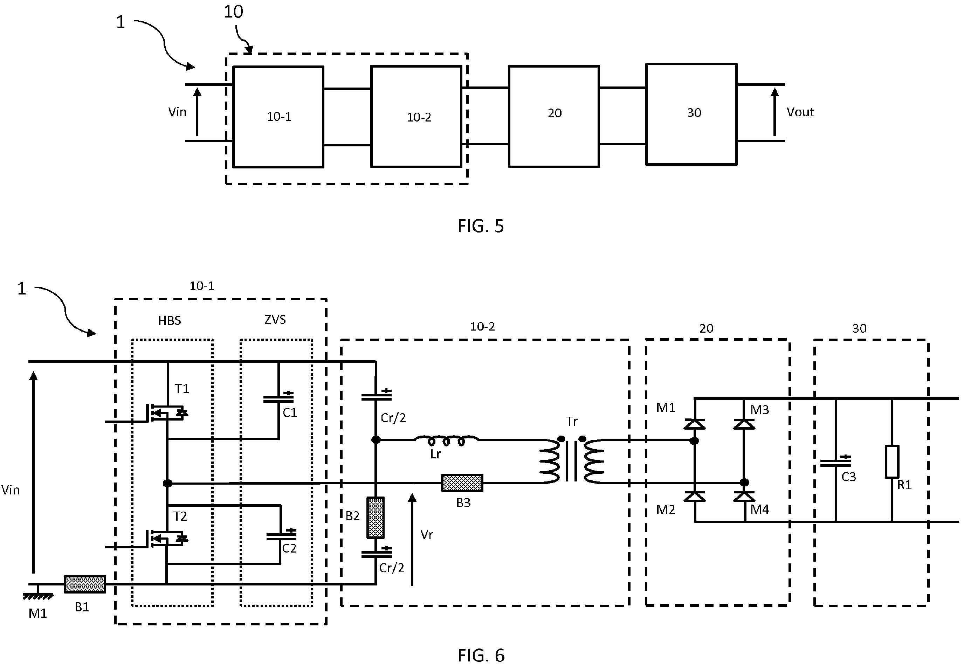

La figure 5 représente un schéma bloc fonctionnel d'une forme de réalisation du système électrique selon l'invention. Ce système électrique est notamment destiné à être monté dans un véhicule automobile électrique ou hybride. L'invention concerne un convertisseur continu-continu DC résonant.

En référence à la figure 5, le système électrique comprend un convertisseur continu-continu résonant 1, comprenant un circuit convertisseur 10, un redresseur 20, connecté en sortie dudit circuit convertisseur 10, et un filtre 30, connecté en sortie dudit redresseur 20. Le filtre 30 peut être omis. Le convertisseur continu-continu résonant 1 permet de convertir une tension continue en une autre tension continue, la topologie détaillée de ce convertisseur sera décrite en détails dans une prochaine partie. Le circuit convertisseur 10, comprend un premier circuit 10-1 et un deuxième circuit 10-2, permettant d'obtenir notamment une tension alternative carrée, autrement dit un courant sinusoïdal, à partir d'une tension continue. Le redresseur 20 permet de convertir une tension alternative carrée en une tension redressée puisée, c'est-à-dire une tension variable mais de signe constant. Le filtre 30 permet de « lisser » la tension obtenue précédemment, c'est-à-dire obtenir en sortie du filtre 30 la valeur moyenne de la tension d'entrée du filtre 30.

La figure 6 représente la topologie détaillée du système électrique présenté à la figure 5, c'est-à-dire d'un convertisseur continu-continu résonant 1. Dans ce mode de réalisation détaillé, le premier circuit 10-1 du circuit convertisseur du convertisseur continu-continu résonant 1 comprend un circuit dit « HBS », de l'anglais « Half Bridge switches ». Par ailleurs, le deuxième circuit 10-2 du circuit convertisseur 10, relié au premier circuit 10-1, comprend un circuit convertisseur LLC résonant.

Le circuit HBS comprend deux transistors T1 et T2, notamment des transistors, et assure une fonction d'alimentation à découpage, grâce aux transistors fonctionnant en commutation. Des pertes peuvent se produire lors de l'activation et de la désactivation du transistor. Des capacités C1, C2 peuvent être connectées respectivement en parallèle des transistors T1, T2 pour permettre des commutations à zéro de tension ou ZVS (pour « Zéro Voltage Switching » en anglais), et de minimiser les pertes dues à la commutation et ainsi d'obtenir une fréquence de commutation plus élevée pour les transistors T1 et T2. Toujours en référence à la figure 6, le convertisseur LLC résonant du deuxième circuit 10-2, comprend une inductance de résonance $L_r$, deux capacités de résonance Cr/2, une première capacité connectée avec une borne haute du premier circuit 10-1 et une deuxième capacité connectée à une borne basse du premier circuit 10-1, les deux capacités étant connectées à leur autre borne au niveau d'un point milieu, et un transformateur Tr, comprenant une inductance au primaire et une inductance magnétisante.

Le redresseur 20 peut être un pont de quatre diodes pour permettre le redressement de tension. En effet, une tension alternative carrée, passant du positif au négatif, est redressée en une tension périodique de signe constant, soit positif, soit négatif.

Par ailleurs, toujours en référence à la figure 6, le filtre 30 peut comprendre une résistance R1 et une capacité C3 montées en parallèle, ou simplement une capacité montée en parallèle du redresseur 20 ou encore un filtre LC. Lorsque la tension d'entrée du filtre 30, correspondant à la tension de sortie du redresseur 20, augmente, la capacité C3 se charge. Puis, lorsque la tension d'entrée du filtre 30 diminue, la capacité C3 se décharge. Mais, de manière connue, une capacité se charge et se décharge « lentement » et donc l'amplitude de la tension délivrée en sortie du filtre 30 est beaucoup plus faible que celle de la tension d'entrée du filtre 30, voire presque nulle. Ainsi, la tension en sortie du filtre 30 est quasiment continue.

La détection d'une potentielle surcharge d'une des capacités de résonance Cr/2 est obtenue à partir du courant de résonance Ir traversant le primaire du transformateur Tr. En référence à la figure 6, le courant de résonance Ir peut être déterminé, en mesurant le courant sur un des points de mesure B1, B2, B3 où :

- le point de mesure B1 est pris à l'entrée du convertisseur résonant de manière à mesurer un courant délivré en entrée du convertisseur résonant,
- le point de mesure B2 est pris dans une branche comprenant une capacité de résonance, notamment à une borne d'une des capacités de résonance Cr/2 de manière à mesurer le courant traversant la capacité de résonance Cr/2,
- le point de mesure B3 est pris dans la branche du circuit qui comprend le primaire du transformateur Tr de manière à mesurer le courant circulant dans le primaire du transformateur ou dans l'inductance de résonance $L_r$.

Par ailleurs, toujours afin de détecter une potentielle surcharge d'une capacité de résonance Cr/2, le système électrique comprend une unité de commande TN. L'unité de commande TN est notamment un dispositif de traitement numérique. Ladite unité de commande TN comprend un premier module de détermination TN1, un deuxième module de détermination TN2, comprenant un module de comparaison TNC, et un élément de coupure. L'unité de commande TN est notamment relié par son premier module de détermination TN1 à un point de mesure parmi les points de mesure B1, B2, B3. L'élément de coupure UP peut être une unité de pilotage des transistors, communément appelé « driver » par l'homme du métier.

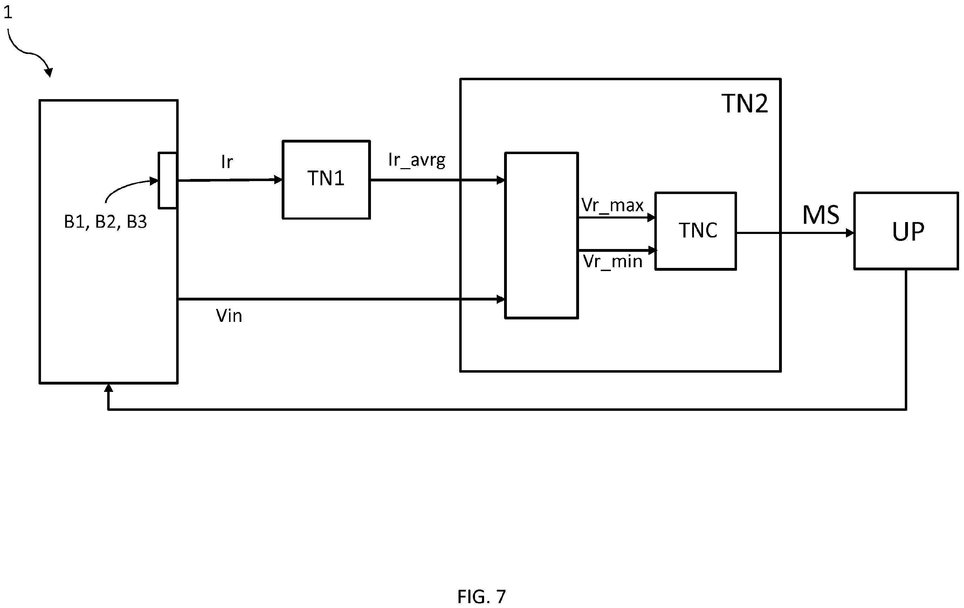

En référence à la figure 7, il est représenté un mode de réalisation du procédé de détection d'une surcharge d'un convertisseur continu-continu résonant 1. Tout d'abord, le premier module de détermination TN1 détermine la valeur moyenne $I_{r\_avrg}$ du courant Ir circulant dans la branche du convertisseur continu-continu résonant 1 qui comprend le transformateur Tr, sur une durée d'évaluation T. La durée d'évaluation T peut s'étendre sur une ou plusieurs périodes de commutation et peut comprendre une portion d'une période de commutation. En particulier, la durée d'évaluation est égale à une ou plusieurs périodes de commutation.

Cette mesure du courant de résonance Ir peut être réalisée directement dans le troisième point de mesure B3 ou indirectement dans le premier point de mesure B1 et le deuxième point de mesure B2. En effet, les points de mesure B1, B2, B3 sont placées sur différentes branches du convertisseur continu-continu résonant 1, mais les valeurs de courant traversant ces points de mesure B1, B2, B3 sont reliées. On définit $I_{B1}$ par le courant traversant le premier point de mesure B1, $I_{B2}$ le courant traversant le deuxième point de mesure B2 et $I_{B3}$ le courant traversant le troisième point de mesure B3. Les approximations suivantes permettent de définir $I_{B1}$ et $I_{B2}$ en fonction de $I_{B3}$ :

$$I_{B1} \approx -\frac{1}{2}I_r$$

$$I_{B2} \approx \frac{1}{2}I_r$$

$$I_{B3} = I_r$$

Ces approximations sont suffisantes pour définir la valeur du courant de résonance Ir.

Lorsque le courant de résonance Ir a été mesuré directement ou indirectement, le premier module de détermination TN1 détermine la valeur absolue $I_{r\_abs}$ du courant de résonance Ir mesuré précédemment. Il détermine ensuite la valeur moyenne $I_{r\_avrg}$ du courant de résonance Ir à partir des valeurs absolues $I_{r\_abs}$ du courant de résonance $I_r$. Ces valeurs absolues ayant été déterminées sur la durée d'évaluation T.

Le deuxième module de détermination TN2 détermine la valeur maximale $V_{r\_max}$ de la tension aux bornes de chaque capacité de résonance Cr/2 et la valeur minimale $V_{r\_min}$ de la tension aux bornes de chaque capacité de résonance Cr/2 à partir du courant moyen $I_{r\_avrg}$ déterminé précédemment. Pour cela, on utilise l'expression d'une tension dans une capacité de résonance. La tension $V_r$ sinusoïdale aux bornes de chaque capacité de résonance Cr/2 est définie par la formule suivante :

$$V_r(t) = \frac{1}{2}V_{in} + U_0 \cos(2\pi F_s t). \tag{1}$$

Dans cette équation, $V_{in}$ désigne la tension d'entrée du convertisseur continu-continu résonant 1, $U_0$ est une constante, notamment représentative de l'amplitude de la tension $V_r$ périodique, $F_s$ désigne la fréquence de commutation des interrupteurs du convertisseur LLC résonant et enfin, t représente le temps. On a deux capacités de résonance Cr/2 identiques, une première capacité connectée avec une borne haute du premier circuit 10-1 et une deuxième capacité connectée à une borne basse du premier circuit 10-1, les deux capacités étant connectées à leur autre borne au niveau d'un point milieu. Le circuit convertisseur LLC résonnant est notamment connecté d'une part au point milieu des capacités de résonance Cr/2 et d'autre part au point milieu des transistors T1, T2. Dans une analyse par modèles petits signaux on considère que ces capacités sont montées en parallèle.

D'autre part, on connaît l'expression du courant dans une capacité, et donc ici dans les capacités de résonance Cr/2, et l'expression du courant de résonance $I_r$ :

$$\frac{1}{2}C_r\frac{dV_r(t)}{dt} = \frac{1}{2}I_r(t) \tag{2}$$

et

$$I_r(t) = I_{r\_peak}\sin(2\pi F_s t) \tag{3}$$

où $I_{r\_peak}$ est la valeur maximale du courant de résonance Ir. Dans (2), en remplaçant $I_r(t)$ par son expression donnée en (3), on obtient :

$$\frac{1}{2}C_r\frac{dV_r(t)}{dt} = \frac{1}{2}I_{r\_peak}\sin(2\pi F_s t) \tag{2bis}$$

Dans l'équation (2bis) on remplace la tension Vr par son expression dans (1). On obtient ainsi :

$$\frac{1}{2}C_r\frac{dV_r(t)}{dt} = \frac{1}{2}C_r\frac{d\left(\left(\frac{1}{2}V_{in} + U_0\cos(2\pi F_s t)\right)\right)}{dt} = \frac{1}{2}I_{r_{peak}}\sin(2\pi F_s t)$$

$$-U_0 2\pi F_s Cr * \sin(2\pi F_s t)) = I_{r_{peak}}\sin(2\pi F_s t)$$

On obtient donc :

$$U_0 = \frac{-I_{r_{peak}}}{2\pi CrF_s} \tag{4}$$

En remplaçant Uo dans (1) par son expression dans (4), on obtient :

$$V_r(t) = \frac{1}{2}V_{in} - \frac{I_{r\_peak}}{2\pi C_r F_s} * \cos(2\pi F_s t) \tag{1-b}$$

Rappelons que $I_{r\_peak} = \sqrt{2}\ I_{r\_RMS}$ avec $I_{r\_RMS}$ définie comme la valeur efficace du courant de résonance $I_r$; ainsi, dans (1-b), en remplaçant $I_{r_{peak}}$ par son expression, on trouve :

$$V_r(t) = \frac{1}{2}V_{in} - \frac{\sqrt{2}\ I_{r\_RMS}}{C_r 2\pi F_s}\cos(2\pi F_s t)$$

D'autre part, dans le cas présent : $I_{r\_RMS} = \frac{\sqrt{2}}{2}\pi I_{r\_avrg}$ avec $I_{r\_avrg}$ défini comme le courant moyen sur une période de $1/F_s$ secondes. Dans l'expression de la tension $V_r(t)$, on remplace $I_{r\_RMS}$ par son expression, on trouve donc :

$$V_r(t) = \frac{1}{2}V_{in} - \frac{I_{r\_avrg}}{C_r 2F_s} \cos(2\pi F_s t)$$

On obtient donc ici l'expression de la tension $V_r$ aux bornes d'une capacité de résonance Cr/2 en fonction de la valeur moyenne $I_{r\_avrg}$ du courant de résonance Ir.

$$V_r(t) = \frac{1}{2}V_{in} - \frac{I_{r\_avrg}}{C_r 2F_s} \cos(2\pi F_s t) \qquad\qquad (1\text{-}c)$$

On sait que $V_{in}$ et $\dfrac{I_{r\_peak}}{C_r 2\pi F_s}$ sont des valeurs constantes. Le seul membre variable de l'expression (1-c) de la tension $V_r$ est le $\cos(2\pi F_s t)$. Ainsi, le maximum d'un $\cos(2\pi F_s t)$ étant égal à 1 et le minimum d'un $\cos(2\pi F_s t)$ étant égale à -1, on en déduit la valeur maximale $V_{r\_max}$ de la tension Vr et la valeur minimale $V_{r\_min}$ de la tension Vr :

$$V_{r\_max} = \frac{1}{2}V_{in} + \frac{I_{r\_avrg}}{C_r 2F_s}$$

$$V_{r\_min} = \frac{1}{2}V_{in} - \frac{I_{r\_avrg}}{C_r 2F_s}$$

On obtient les expressions de la valeur maximale $V_{r\_max}$ et de la valeur minimale $V_{r\_min}$ en fonction de la valeur moyenne $I_{r\_avrg}$ du courant de résonance. Notamment la tension d'entrée Vin et la fréquence de commutation Fs sont constants sur la durée d'évaluation T.

Toujours en référence à la figure 7, le deuxième module de détermination TN2 comprend un module de comparaison TNC, qui réalise la comparaison d'une part entre un seuil maximal de tension $V_{r\_define\_max}$ et la valeur maximale $V_{r\_max}$ et d'autre part entre un seuil minimal de tension $V_{r\_define\_min}$ et la valeur minimale $V_{r\_min}$. Ledit seuil maximal de tension $V_{r\_define\_max}$ est notamment défini comme la valeur de tension maximale au bornes de la capacité de résonance, au-dessus de laquelle ladite capacité est en surcharge. Par ailleurs, ledit seuil minimal de tension $V_{r\_define\_min}$, est notamment défini comme la valeur de tension minimale aux bornes de la capacité de résonance en dessous de laquelle, ladite capacité de résonance est en surcharge.

Ainsi, la détection d'une surcharge se fait lorsque la valeur maximale $V_{r\_max}$ de tension est supérieure ou égale au seuil maximal de tension $V_{r\_define\_max}$ et/ou lorsque la valeur minimale $V_{r\_min}$ de tension est inférieure ou égale au seuil minimal de tension $V_{r\_define\_min}$.

Toujours en référence à la figure 7, lorsqu'il y a détection d'une surcharge, le module de de comparaison envoie un message d'arrêt MS à l'élément de coupure UP du convertisseur continu-continu résonant 1. L'élément de coupure UP du système électrique reçoit ledit message d'arrêt MS contenant une commande d'arrêt MS envoyé précédemment. Après la réception de ce message d'arrêt MS, l'élément de coupure UP arrête le fonctionnement du convertisseur continu-continu résonant 1, protégeant ainsi le convertisseur continu-continu résonant 1 d'une détérioration de ses composants, ladite détérioration étant due à une surcharge.

**Revendications**

**1.** Système électrique permettant la conversion d'une tension continue en une autre tension continue, comprenant :

- un convertisseur continu-continu résonant (1) comprenant un circuit convertisseur LLC résonant comprenant une inductance de résonance (Lr), deux capacités de résonance (Cr/2) et un transformateur (Tr)
- **caractérisé par**
une unité de commande (TN) comprenant :

  ○ un premier module de détermination (TN1) de la valeur moyenne ($I_{r\_avrg}$) d'un courant, dit « courant de résonance » ($I_r$), circulant dans une branche du circuit convertisseur LLC résonant qui comprend le transformateur (Tr), sur une durée (T) dite « durée d'évaluation »,

◦ un deuxième module de détermination (TN2) d'une valeur maximale ($V_{r\_max}$) de la tension aux bornes de chaque capacité de résonance (Cr/2) et d'une valeur minimale ($V_{r\_min}$) de la tension aux bornes de chaque capacité de résonance (Cr/2) sur la durée dévaluation « T », à partir de la valeur moyenne ($I_{r\_avrg}$) du courant de résonance, de la tension d'entrée ($V_{in}$) du convertisseur continu-continu résonant, de la fréquence de commutation ($F_s$) du convertisseur continu-continu résonant, et de la valeur de la capacité de résonance (Cr),

◦ un module de comparaison (TNC) entre un seuil maximal de tension ($V_{r\_define\_max}$) et la valeur maximale ($V_{r\_max}$) de la tension aux bornes de chaque capacité de résonance (Cr/2) et entre un seuil minimal de tension ($V_{r\_define\_min}$) et la valeur minimale ($V_{r\_min}$) de la tension aux bornes de chaque capacité de résonance (Cr/2),

◦ un élément de coupure (UP) configuré pour arrêter le fonctionnement du convertisseur continu-continu résonant (1) si :

- ladite valeur maximale de tension ($V_{r\_max}$) est supérieure ou égale au seuil maximal de tension ($V_{r\_define\_max}$),
- ladite valeur minimale de tension ($V_{r\_min}$) est inférieure ou égale au seuil minimal de tension ($V_{r\_define\_min}$).

2. Système électrique, selon la revendication précédente, dans lequel le premier module de détermination (TN1) est configuré pour déterminer le courant de résonance ($I_r$) à partir d'une mesure de courant en un point de mesure parmi un premier point de mesure (B1) situé à l'entrée du convertisseur continu-continu résonant (1), un deuxième point de mesure (B2) situé dans une branche comprenant une capacité de résonance (Cr/2) et un troisième point de mesure (B3) situé dans une branche comprenant le transformateur (Tr).

3. Système électrique selon l'une des revendications précédentes, dans lequel le convertisseur continu-continu résonant (1) comprend un redresseur (20), connecté en sortie du transformateur (Tr), notamment au niveau du secondaire du transformateur.

4. Système électrique selon l'une des revendications précédentes, comprenant un filtre (30), connecté en sortie du convertisseur continu-continu résonant (1).

5. Système électrique selon l'une des revendications précédentes, dans lequel le module de comparaison (TNC) est configuré de sorte que
ledit seuil maximal de tension ($V_{r\_define\_max}$), définit une valeur maximale de tension autorisée aux bornes de la capacité de résonance, notamment au-dessus de laquelle ladite capacité est en surcharge, et
ledit seuil minimal de tension ($V_{r\_define\_min}$), définit une valeur minimale de tension autorisée aux bornes de la capacité de résonance, notamment en dessous de laquelle ladite capacité de résonance est en surcharge.

6. Procédé de détection d'une surcharge d'un convertisseur continu-continu résonant (1) mis en œuvre dans un système électrique comportant un convertisseur continu-continu résonant (1) comprenant un circuit convertisseur LLC résonant qui comprend une inductance de résonance (Lr), deux capacités de résonance (Cr/2) et un transformateur (Tr), ledit procédé étant **caractérisé en ce qu'**il comprend des étapes de :

- détermination de la valeur moyenne ($I_{r\_avrg}$) d'un courant, dit « courant de résonance » ($I_r$), circulant dans une branche du circuit convertisseur LLC résonant qui comprend le transformateur (Tr), sur une durée (T) dite « durée d'évaluation »,
- détermination d'une valeur maximale ($V_{r\_max}$) de la tension aux bornes de chaque capacité de résonance (Cr/2) et d'une valeur minimale ($V_{r\_min}$) de la tension aux bornes de chaque capacité de résonance (Cr/2), sur la durée dévaluation « T », à partir de la valeur moyenne ($I_{r\_avrg}$) déterminée à l'étape précédente, de la tension d'entrée ($V_{in}$) du convertisseur continu-continu résonant, de la fréquence de commutation ($F_s$) du convertisseur continu-continu résonant, et de la valeur de la capacité de résonance (Cr),
- comparaison entre un seuil maximal de tension ($V_{r\_define\_max}$) et la valeur maximale ($V_{r\_max}$) de la tension aux bornes de chaque capacité de résonance (Cr/2) et entre un seuil minimal de tension ($V_{r\_define\_min}$) et la valeur minimale ($V_{r\_min}$) de la tension aux bornes de chaque capacité de résonance (Cr/2),
- détection d'une surcharge d'une capacité de résonance (Cr/2) si ladite valeur maximale de tension ($V_{r\_max}$) est supérieure ou égale au seuil maximal de tension ($V_{r\_define\_max}$), et/ou si ladite valeur minimale de tension ($V_{r\_min}$) est inférieure ou égale au seuil minimal de tension ($V_{r\_define\_min}$).

7. Procédé selon la revendication précédente, comprenant, après l'étape de détection d'une surcharge, une étape de coupure du convertisseur continu-continu résonant (1), dans laquelle le fonctionnement du convertisseur continu-continu résonant (1) est arrêté.

8. Procédé selon la revendication précédente, dans lequel la valeur maximale ($V_{r\_max}$) de la tension aux bornes de chaque capacité de résonance (Cr/2) est déterminée suivant la formule

$$V_{r\_max} = \frac{1}{2}V_{in} + \frac{I_{r\_avrg}}{C_r 2 F_s}$$

et
la valeur minimale ($V_{r\_min}$) de la tension aux bornes de chaque capacité de résonance (Cr/2) est déterminée suivant la formule

$$V_{r\_min} = \frac{1}{2}V_{in} - \frac{I_{r\_avrg}}{C_r 2 F_s},$$

où $V_{in}$ est la tension d'entrée du convertisseur continu-continu résonant (1) et $F_s$ est la fréquence de commutation du continu-continu résonant.

**Patentansprüche**

1. Elektrisches System, das die Umwandlung einer Gleichspannung in eine andere Gleichspannung gestattet, umfassend:

   • einen Gleichstrom-Gleichstrom-Resonanzwandler (1), umfassend einen Resonanzwandlerkreis LLC, umfassend eine Resonanzinduktivität (Lr), zwei Resonanzkapazitäten (Cr/2) und einen Transformator (Tr), **gekennzeichnet durch** eine Steuereinheit (TN), umfassend:

     ◦ ein erstes Bestimmungsmodul (TN1) des Mittelwerts ($I_{r\_avrg}$) eines als "Resonanzstrom" ($I_r$) bezeichneten Stroms, der in einem Zweig des Resonanzwandlerkreises LLC, der den Transformator (Tr) umfasst, über einen als "Bewertungszeitraum" bezeichneten Zeitraum (T) fließt,
     ◦ ein zweites Bestimmungsmodul (TN2) eines maximalen Werts ($V_{r\_max}$) der Spannung an den Klemmen jeder Resonanzkapazität (Cr/2) und eines minimalen Werts ($V_{r\_min}$) der Spannung an den Klemmen jeder Resonanzkapazität (Cr/2) über den Bewertungszeitraum "T" auf der Basis des Mittelwerts ($I_{r\_avrg}$) des Resonanzstroms, der Eingangsspannung ($V_{in}$) des Gleichstrom-Gleichstrom-Resonanzwandlers, der Schaltfrequenz ($F_s$) des Gleichstrom-Gleichstrom-Resonanzwandlers und des Werts der Resonanzkapazität (Cr),
     ◦ ein Vergleichsmodul (TNC) zwischen einem maximalen Spannungsgrenzwert ($V_{r\_define\_max}$) und dem maximalen Wert ($V_{r\_max}$) der Spannung an den Klemmen jeder Resonanzkapazität (Cr/2) und zwischen einem minimalen Spannungsgrenzwert ($V_{r\_define\_min}$) und dem minimalen Wert ($V_{r\_min}$) der Spannung an den Klemmen jeder Resonanzkapazität (Cr/2),
     ◦ ein Trennelement (UP), das ausgelegt ist, um den Betrieb des Gleichstrom-Gleichstrom-Resonanzwandlers (1) zu stoppen, wenn:

       ▪ der maximalen Spannungswert ($V_{r\_max}$) höher als der oder gleich dem maximalen Spannungsgrenzwert ($V_{r\_define\_max}$) ist,
       ▪ der minimale Spannungswert ($V_{r\_min}$) kleiner als der oder gleich dem minimalen Spannungsgrenzwert ($V_{r\_define\_min}$) ist.

2. Elektrisches System nach vorangehendem Anspruch, wobei das erste Bestimmungsmodul (TN1) ausgelegt ist, um den Resonanzstrom ($I_r$) auf der Basis einer Strommessung an einem Messpunkt von einem ersten Messpunkt (B1), der sich am Eingang des Gleichstrom-Gleichstrom-Resonanzwandlers (1) befindet, einem zweiten Messpunkt (B2), der sich in einem Zweig befindet, der eine Resonanzkapazität (Cr/2) umfasst, und einem dritten Messpunkt (B3), der sich in einem Zweig befindet, der den Transformator (Tr) umfasst, zu bestimmen.

3. Elektrisches System nach einem der vorangehenden Ansprüche, wobei der Gleichstrom-Gleichstrom-Resonanzwandler (1) einen Gleichrichter (20) umfasst, der am Ausgang des Transformators (Tr), insbesondere im Bereich der Sekundärseite des Transformators, angeschlossen ist.

4. Elektrisches System nach einem der vorangehenden Ansprüche, umfassend einen Filter (30), der am Ausgang des Gleichstrom-Gleichstrom-Resonanzwandlers (1) angeschlossen ist.

5. Elektrisches System nach einem der vorangehenden Ansprüche, wobei das Vergleichsmodul (TNC) derart ausgelegt ist, dass

der maximale Spannungsgrenzwert ($V_{r\_define\_max}$) einen maximalen Spannungswert festlegt, der an den Klemmen der Resonanzkapazität gestattet ist, insbesondere über dem die Kapazität überlastet ist, und

der minimale Spannungsgrenzwert ($V_{r\_define\_min}$) einen minimalen Spannungswert festlegt, der an den Klemmen der Resonanzkapazität gestattet ist, insbesondere unter dem die Resonanzkapazität überlastet ist.

6. Verfahren zum Ermitteln einer Überlastung eines Gleichstrom-Gleichstrom-Resonanzwandlers (1), implementiert in ein elektrisches System, aufweisend einen Gleichstrom-Gleichstrom-Resonanzwandler (1), umfassend einen Resonanzwandlerkreis LLC, der eine Resonanzinduktivität (Lr), zwei Resonanzkapazitäten (Cr/2) und einen Transformator (Tr) umfasst, wobei das Verfahren **dadurch gekennzeichnet ist, dass** es die folgenden Schritte umfasst:

• Bestimmen des Mittelwerts ($I_{r\_avrg}$) eines als "Resonanzstrom" ($I_r$) bezeichneten Stroms, der in einem Zweig des Resonanzwandlerkreises LLC, der den Transformator (Tr) umfasst, über einen als "Bewertungszeitraum" bezeichneten Zeitraum (T) fließt,

• Bestimmen eines maximalen Werts ($V_{r\_max}$) der Spannung an den Klemmen jeder Resonanzkapazität (Cr/2) und eines minimalen Werts ($V_{r\_min}$) der Spannung an den Klemmen jeder Resonanzkapazität (Cr/2) über den Bewertungszeitraum "T" auf der Basis des in vorangegangenem Schritt bestimmten Mittelwerts ($I_{r\_avrg}$), der Eingangsspannung ($V_{in}$) des Gleichstrom-Gleichstrom-Resonanzwandlers, der Schaltfrequenz ($F_s$) des Gleichstrom-Gleichstrom-Resonanzwandlers und des Werts der Resonanzkapazität (Cr),

• Vergleichen zwischen einem maximalen Spannungsgrenzwert ($V_{r\_define\_max}$) und dem maximalen Wert ($V_{r\_max}$) der Spannung an den Klemmen jeder Resonanzkapazität (Cr/2) und zwischen einem minimalen Spannungsgrenzwert ($V_{r\_define\_min}$) und dem minimalen Wert ($V_{r\_min}$) der Spannung an den Klemmen jeder Resonanzkapazität (Cr/2),

• Ermitteln einer Überlastung einer Resonanzkapazität (Cr/2), wenn der maximale Spannungswert ($V_{r\_max}$) größer als der oder gleich dem maximalen Spannungsgrenzwert ($V_{r\_define\_max}$) ist und/oder wenn der minimale Spannungswert ($V_{r\_min}$) kleiner als der oder gleich dem minimalen Spannungsgrenzwert ($V_{r\_define\_min}$) ist.

7. Verfahren nach vorangehendem Anspruch, umfassend, nach dem Ermittlungsschritt einer Überlastung, einen Trennschritt des Gleichstrom-Gleichstrom-Resonanzwandlers (1), bei dem der Betrieb des Gleichstrom-Gleichstrom-Resonanzwandlers (1) gestoppt wird.

8. Verfahren nach vorangehendem Anspruch, wobei der maximale Wert ($V_{r\_max}$) der Spannung an den Klemmen jeder Resonanzkapazität (Cr/2) nach der folgenden Formel bestimmt wird

$$V_{r\_max} = \frac{1}{2}V_{in} + \frac{I_{r\_avrg}}{C_r 2F_s}$$

und

der minimale Wert ($V_{r\_min}$) der Spannung an den Klemmen jeder Resonanzkapazität (Cr/2) nach der folgenden Formel bestimmt wird

$$V_{r\_min} = \frac{1}{2}V_{in} - \frac{I_{r\_avrg}}{C_r 2F_s},$$

wobei $V_{in}$ die Eingangsspannung des Gleichstrom-Gleichstrom-Resonanzwandlers (1) ist und $F_s$ die Schaltfrequenz des Gleichstrom-Gleichstrom-Resonanzwandlers ist.

**Claims**

1. Electrical system allowing for the conversion of a direct voltage into another direct voltage, comprising:

   • a resonant DC-DC converter (1) comprising a resonant converter circuit LLC comprising a resonance inductance (Lr), two resonance capacitors (Cr/2) and a transformer (Tr),
   • **characterised by**
   a control unit (TN) comprising:

      ∘ a first module for determining (TN1) the average value ($I_{r\_avrg}$) of a current, referred to as "resonance current" ($I_r$), circulating in a branch of the resonant converter circuit LLC which comprises the transformer (Tr), over a duration (T) referred to as "evaluation duration",
      ∘ a second module for determining (TN2) a maximum value ($V_{r\_max}$) of the voltage at the terminals of each resonance capacitor (Cr/2) and of a minimum value ($V_{r\_min}$) of the voltage at the terminals of each resonance capacitor (Cr/2) over the evaluation duration "T", using the average value ($I_{r\_avrg}$) of the resonance current, of the input voltage ($V_{in}$) of the resonant DC-DC converter, of the switching frequency ($F_S$) of the resonant DC-DC converter, and of the value of the resonance capacitor (Cr).
      ∘ a module for comparing (TNC) between a maximum voltage threshold ($V_{r\_define\_max}$) and the maximum value ($V_{r\_max}$) of the voltage at the terminals of each resonance capacitor (Cr/2) and between a minimum voltage threshold ($V_{r\_define\_min}$) and the minimum value ($V_{r\_min}$) of the voltage at the terminals of each resonance capacitor (Cr/2),
      ∘ a cut-off element (UP) configured to cut off the operation of the resonant DC-DC converter (1) if:

         • said maximum voltage value ($V_{r\_max}$) is greater than or equal to the maximum voltage threshold ($V_{r\_define\_max}$),
         • said minimum voltage value ($V_{r\_min}$) is less than or equal to the minimum voltage threshold ($V_{r\_define\_min}$).

2. Electrical system, according to the preceding claim, wherein the first module for determining (TN1) is configured to determine the resonance current ($I_r$) using a measurement of current at a measuring point from among a first measuring point (B1) located at the input of the resonant DC-DC converter (1), a second measuring point (B2) located in a branch comprising a resonance capacitor (Cr/2) and a third measuring point (B3) located in a branch comprising the transformer (Tr).

3. Electrical system according to one of the preceding claims, wherein the resonant DC-DC converter (1) comprises a rectifier (20), connected at the output of the transformer (Tr), in particular on the secondary of the transformer.

4. Electrical system according to one of the preceding claims, comprising a filter (30), connected at the output of the resonant DC-DC converter (1).

5. Electrical system according to one of the preceding claims, wherein the module for comparing (TNC) is configured in such a way that
   said maximum voltage threshold ($V_{r\_define\_max}$), defines a maximum voltage value authorised at the terminals of the resonance capacitor, in particular above which said capacitor is overloaded, and
   said minimum voltage threshold ($V_{r\_define\_min}$), defines a minimum voltage value authorised at the terminals of the resonance capacitor, in particular below which said resonance capacitor is overloaded.

6. Method for detecting an overloading of a resonant DC-DC converter (1) implemented in an electrical system comprising a resonant DC-DC converter (1) comprising a resonant converter circuit LLC which comprises a resonance inductance (L), two resonance capacitors (Cr/2) and a transformer (Tr),
   said method being **characterised in that** it comprises the steps of:

      • determining the average value ($I_{r\_avrg}$) of a current, referred to as "resonance current" ($I_r$), circulating in a branch of the resonant converter circuit LLC which comprises the transformer (Tr), over a duration (T) referred to as "evaluation duration",
      • determining a maximum value ($V_{r\_max}$) of the voltage at the terminals of each resonance capacitor (Cr/2) and of a minimum value ($V_{r\_min}$) of the voltage at the terminals of each resonance capacitor (Cr/2), over the evaluation duration "T", using the average value ($I_{r\_avrg}$) determined in the preceding step, of the input voltage ($V_{in}$) of the

resonant DC-DC converter, of the switching frequency ($F_S$) of the resonant DC-DC converter, and of the value of the resonance capacitor (Cr).

• comparing between a maximum voltage threshold ($V_{r\_define\_max}$) and the maximum value ($V_{r\_max}$) of the voltage at the terminals of each resonance capacitor (Cr/2) and between a minimum voltage threshold ($V_{r\_define\_min}$) and the minimum value ($V_{r\_min}$) of the voltage at the terminals of each resonance capacitor (Cr/2),

• detecting an overloading of a resonance capacitor (Cr/2) if said maximum voltage value ($V_{r\_max}$) is greater than or equal to the maximum voltage threshold ($V_{r\_define\_max}$), and/or if said minimum voltage value ($V_{r\_min}$) is less than or equal to the minimum voltage threshold ($V_{r\_define\_min}$).

7. Method according to the preceding claim, comprising, after the step of detecting an overloading, a step of cutting off the resonant DC-DC converter (1), in which the operation of the resonant DC-DC converter (1) is stopped.

8. Method according to the preceding claim, wherein the maximum value ($V_{r\_max}$) of the voltage at the terminals of each resonance capacitor (Cr/2) is determined according to the formula

$$V_{r\_max} = \frac{1}{2}V_{in} + \frac{I_{r\_avrg}}{C_r 2 F_s}$$

and
the minimum value ($V_{r\_min}$) of the voltage at the terminals of each resonance capacitor (Cr/2) is determined according to the formula

$$V_{r\_min} = \frac{1}{2}V_{in} - \frac{I_{r\_avrg}}{C_r 2 F_s},$$

where $V_{in}$ is the input voltage of the resonant DC-DC converter (1) and $F_S$ is the switching frequency of the resonant DC-DC converter.

FIG. 1

FIG. 2

FIG. 3

FIG. 4

FIG. 5

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2015049520 A1
- EP 2709228 A1
- EP 3386053 A1

**Littérature non-brevet citée dans la description**

- Overcurrent protection for the LLC resonant converter with improved hold-up time. **FIGGE H et al.** APPLIED POWER ELECTRONICS CONFERENCE AND EXPOSITION (APEC), 2011 TWENTY-SIXTH ANNUAL IEEE. IEEE, 06 Mars 2011, 13-20